# EUROPEAN PATENT APPLICATION

(11) **EP 0 982 967 A2**
(43) Date of publication of application: **01.03.2000**
(21) Application number: 99116716.4
(22) Date of filing: 26.08.1999
(51) Int. Cl.: H04Q 11/04

(54) **Device and method of multiplexing atm cells**

(30) Priority: 27.08.1998 JP 24163898
(71) Applicant: NEC CORPORATION, Tokyo (JP)
(72) Inventor: Aihara, Satoshi, Minato-ku, Tokyo (JP)
(74) Representative: VOSSIUS & PARTNER

(57) **Abstract**

The ATM cell multiplexing device stores a plurality of quality classes of ATM cells into one cell buffer collectively, and stores and controls a value of the pointer, which is a value of the address of the ATM cell stored in the cell buffer, in one of class buffers each of which corresponds to a quality class. To read the ATM cell for each quality class, the value of the pointer of the cell buffer in each class buffer is used.

## Description

The invention relates to a device and a method of multiplexing ATM (abbreviated to Asynchronous Transfer Mode) cells.

Generally, an ATM communication method makes it possible to efficiently communicate among various sources with various characteristics by dividing a sequence of communication data into packets or cells each of which has a constant data length and which may be referred to as cells (ATM cells). In the ATM communication method, the ATM cells are statistically multiplexed, and thereafter transmitted to a transmission line.

In the meanwhile, an ATM cell multiplexing device used for the ATM communication method receives cells and temporarily stores the cells into buffers (cell buffers) for each transmission line or for each quality class which is defined by, for example, properties of sources. In addition, the ATM cell multiplexing device arbitrates and multiplexes the cells read out of the buffers into a multiplexed cell sequence. The multiplexed cell sequence is sent to each transmission line on the basis of a sending priority which is determined by, for example, the quality class.

When a cell can not be written from a buffer, the cell is discarded without being sent. Accordingly, the amount of the buffer should be large in a memory capacity to keep a low discarding rate. On the other hand, when the amount of the buffer is kept large and the low discarding rate is achieved, this causes a delay of transmission to occur since a very long time is required until the cell written into the buffer is read from the buffer.

Also, depending upon a kind of sources, quality of service which is needed must be varied. In this case, either of a low discarding rate or a small delay time is selected in the first place.

For example, when the source generates a sound, an increase of the delay time severely degrade the quality of service, but discarding the cell is allowable to some extent.

On the contrary, when the source generates numerical data or facsimile data, increasing the delay time may be allowable to some extent, but discarding cell should not be allowed.

Therefore, to such sources which have a variety of allowance conditions, an ATM cell multiplexing device must be desirably operable to optimize the delay time and the discarding rate.

Thereby, sophisticated services may be provided in each level which is needed by using cell buffers each of which corresponds to one of quality managing classes.

However, an ATM cell multiplexing device as described above has the problem that a large amount of memory is needed due to low efficiency of usage of the cell buffer.

Quality classes of ATM cells which are to be sent to a transmission line and which are provided into an ATM cell multiplexing device are distributed over a wide range and are therefore indefinite in a short time.

For example, when the ATM cells are concentrated on a specific quality class by N cells, an available space of a cell buffer of the quality class is held to accumulate the N of the ATM cells which is to be sent to the corresponding transmission line. In this case, cell buffers of the other quality level are also needed to have an available space for N of the ATM cells, although the cell buffers are not used completely.

Therefore, it is an object of the invention to provide an ATM cell multiplexing device which is operable to resolve the above problems.

Also, it is an object of the invention to provide an ATM cell multiplexing device which is operable to heighten the efficiency of usage of the cell buffers and achieve similar performance with less memory.

According to a first aspect of the invention, there is provided a method of multiplexing ATM cells, which are classified into different quality classes and being stored in a cell storage, into a sequence of transmitted ATM cells transmitted through a transmission line. The method comprises the steps of storing the ATM cells of different quality classes in empty areas in the cell storage, storing, for each quality classes, pointer values which point the areas storing ATM cells of different quality classes, reading the pointer values for each quality class with reference to the pointer values stored, and reading the ATM cells stored in the areas by using the pointer values to send the transmitted ATM cells to the transmission line.

According to a second aspect of the invention, there is provided an ATM cell multiplexing device which multiplexes ATM cells, which are classified into different quality classes, into a sequence of transmitted ATM cells transmitted through a transmission line. The ATM cell multiplexing device comprises a cell storage which stores the ATM cells of different quality classes in empty areas, a pointer manager which manages addresses of the areas storing the ATM cells, a quality class determining circuit which determines quality classes of the ATM cells, a pointer value storage which stores, for each quality class, pointer values of the areas storing the ATM cells under control of the pointer manager, and a sending priority controller which reads the pointer values for each quality class from the pointer value storage, reads the ATM cells stored in the areas in the cell storage with reference to the pointer values which point the areas, and sends the ATM cells to the transmission line.

According to a third aspect of the invention, there is provided an ATM cell multiplexing device which is operable to deal with ATM cells which are classified into different quality classes. The ATM cell multiplexing device comprises a cell buffer which includes a plurality of areas each of which stores one of the ATM cells, an access manager which performs read operation and write operation of the ATM cells for the cell buffer using pointers each of which corresponds to an area, and a pointer manager which relates each of the pointers with the quality class of the ATM cell which is written to the area which is pointed by the pointer.

According to a fourth aspect of the invention, there is provided a method of multiplexing of ATM cells which is operable to deal with ATM cells which are classified into different quality classes. The method comprises the steps of storing the ATM cells into areas, relating each of the areas with a pointer, relating each of the pointers with the quality class of the ATM cell which is stored in the area which is pointed by the pointer, and reading the ATM cells from the areas using the pointers for each quality class.
Fig. 1 schematically shows a buffer memory of the device used in a previous technique;
Fig. 2 shows a block diagram of an example of the a device used in a previous technique;
Fig. 3 schematically shows a configuration of mobile communication network to which the ATM cell multiplexing device of the invention applies;
Fig. 4 shows a block diagram of one embodiment of the invention;
Fig. 5A shows flowchart representing operations of the devices shown in Fig. 4;
Fig. 5B shows flowchart representing operations of the devices shown in Fig. 4;
Fig. 6 shows a layout of an ATM cell, an ATM cell header, and an AAL header;
Fig. 7 shows a block diagram of a pointer managing device 7 shown in Fig. 4; and
Fig. 8 schematically shows a buffer memory of the device of the invention.

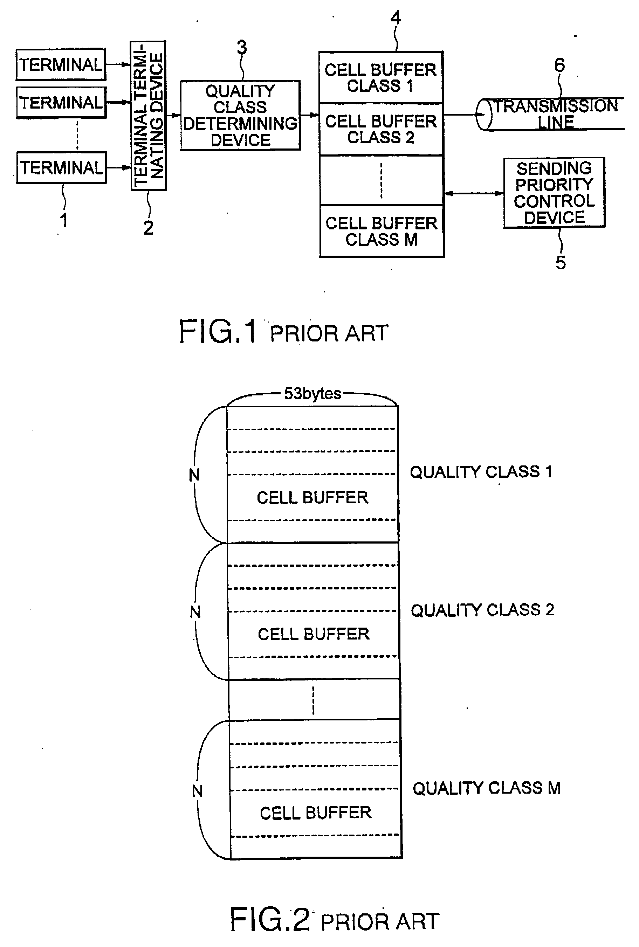

At first, the previous technique of an ATM communication is described with reference to Figs. 1 and 2. Fig. 1 shows a configuration of an ATM cell multiplexing device which is disclosed in Japanese Laying-Open Publication No. H04-157844(namely, 157844/1992) entitled "A Buffer of an ATM cell Multiplexing Device". In Fig. 1, when a quality class determining device 3 receives ATM cells from one of the terminals 1, the quality class determining device 3 determines quality class of the ATM cells. The ATM cell are then temporally stored into one of cell buffers 4 which corresponds to the quality class of the ATM cells.

Herein, quality class is a class which identifies acceptable condition that how long is a delay time acceptable or how much is a discard rate acceptable for sources, for example, a voice, an image, and data. The quality class is determined according to a VPI (Virtual Path Identifier) or VCI (Virtual Channel Identifier) which are included an ATM cell header and which are assigned to each connection in being connected by demand of one of the terminal 1.

When the ATM cells are stored into one of the cell buffer 4 as described above, cell sending request is occurred, the quality class is determined for each ATM cell by controlling priority so as to ensure a certain bandwidth for each quality class by a sending priority control device 5, the ATM cells are read from the cell buffer 4 of the determined quality class, and the ATM cells which are read from the cell buffer 4 are multiplexed one after another and sent to a transmission line 6.

In this case, assuming that the number of ATM cells which can be stored in a cell buffer is 2ⁿ (=N), the number of quality classes which are to be sent is M, and each of the buffer has the same amount which N of ATM cells may be stored so as to operate normally even if the ATM cells concentrate into a quality class, M of the cell buffers each of which has N x 53(bytes) of length are needed as shown in Fig. 2. However, such a configuration, there are many unused areas, as a result, efficiency of usage of the cell buffers is reduced.

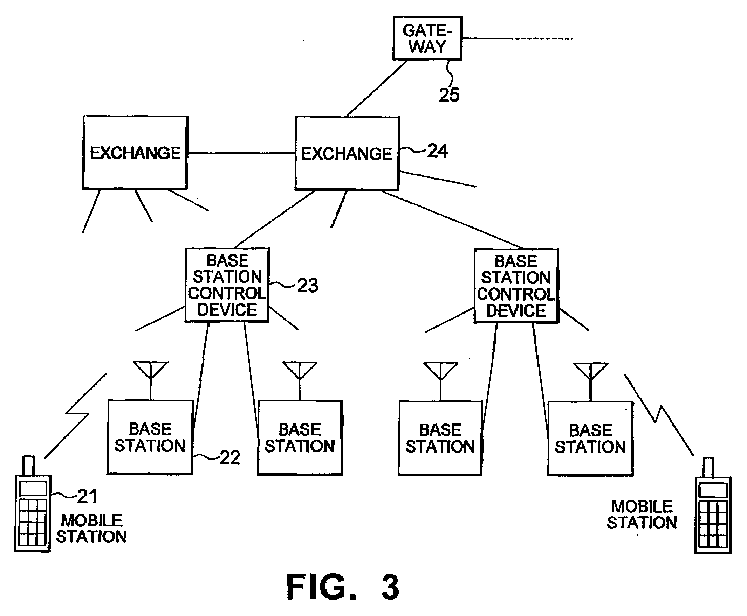

Next, description of an embodiment of the invention is made with reference to Figs. 3 to 8.

An embodiment of an ATM cell multiplexing device according to the invention may be applied to, for example, a mobile communication system shown in Fig. 3. In more detail, the invention may be applied to base stations 22, base station control devices 23, exchanges 25 or gateway 25 in the mobile communication system which is configured based on an ATM communication network and employs TDMA. But application of the invention is not limited to them. The invention also may be applied to, for example, general nodes which configure an ATM communication network in all communication techniques as far as the ATM communication network is used regardless of radio communication or wire communication as well as a radio communication technique.

In a network of the mobile communication system which is configured by the base stations 22, the base station control devices 23, and the exchanges 25, an ATM technology has been employed in view of diversification (changing to multimedia) of service which the mobile communication system provides or in view of efficient usage by multiplexing statistically of transmission line which connects among the base stations 22, base station control devices 23, and exchanges 25.

Referring to Fig. 3, the mobile stations 21 take use of the mobile communication system and communicate the other mobile station or the other terminals which are connected to the other network. These communications are performed in various way such as communication using a voice or an image (for example, FAX), and a data communication.

Communication data from the mobile station 21 is sent to one of the base station 22 by a radio communication. The base station 22 receives the communication data from the mobile station 21 or the other mobile station, divides the communication data into ATM cells, and sends the ATM cells to the base station control device 23.

Thereby, the communication data may be commonly treated as ATM cells in an ATM communication network regardless of the kind of the communication data. Therefore, the mobile communication system may be configured which easily cope with a communication method which varies as multimedia technology is developed.

The base station control devices 23 perform routing about the ATM cells received from the base stations 22 for each user and send the ATM calls to the exchange 24 or to one of the other base stations which are controlled by the base station control devices 23. As similar to the base station control devices 23, the exchange 24 perform routing about the ATM cells received from the base station control devices 23 for each user and send the ATM cells to the other exchange or to the gateway 25. The gateway 25 interchanges the ATM cells with the other network, for example, wire telephone communication network.

In this case, since the ATM cells which are to be sent to the same direction in the ATM communication network may be sent asynchronously into the same transmission line in response to the occurrence of the ATM cell regardless of user of the ATM cell, it is no use to prepare transmission lines of a predetermined channel for user, unlike the previous communication network system. Therefore, the communication network system according to the invention can effectively use transmission lines by multiplexing statistically.

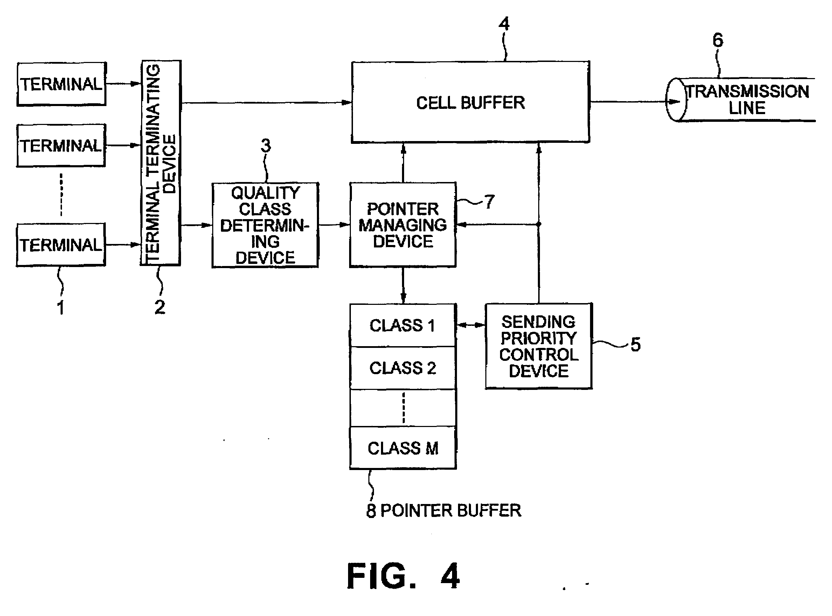

Then, referring to Fig. 4, description is made about an ATM cell multiplexing device according to the invention.

Fig. 4 shows a block diagram of a base station including an ATM cell multiplexing device according to the invention. The base station is, for example, the base station 22 as shown in Fig. 3.

A plurality of terminals 1 receives a variety of data such as a voice, in image, and coded data from the mobile station 21 shown in Fig. 1, and converts the data into ATM cells each of which has quality class. A terminal terminating device 2 terminates the ATM cells which are sent from the plurality of terminals 1.

A quality class determining device 3 extracts information such as VPI and VCI which are included in a header field in an ATM cell which is terminated at the terminal terminating device 2, and determines quality class of the ATM cell based on the information.

A cell buffer 4 is a means which temporally stores the ATM cell.

A pointer managing device 7 manages pointers which are of the ATM cell and stored in the cell buffer 4.

A pointer buffer 8 is a means which stores pointers of ATM cells which stored in the cell buffer 4 and includes a plurality of class buffers (class 1 to class M) each of which corresponds to one of quality classes. The pointers are stored into one of the class buffers according to a quality class which is determined by the quality class determining device 3 in the manner of FIFO (first-in first-out).

A sending priority controlling device 5 determines a quality class of an ATM cell which is to be sent according to a predetermined priority algorithm, reads out a pointer value from the corresponding class buffer in the pointer buffer 8, reads out the ATM cell which is stored at the pointer value in the sell buffer 4, and sends the ATM cell to a transmission line 6.

Next, description is made about operations of the ATM cell multiplexing device according to the invention.

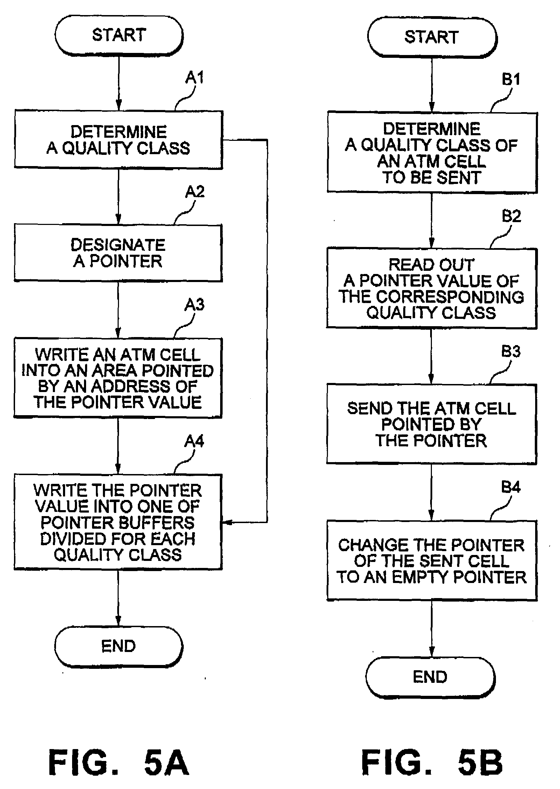

Fig. 5A shows a flowchart of write operation of an ATM cell into the cell buffer 4. Fig. 5B shows a flowchart of read operation of an ATM cell from the cell buffer 4.

At first, referring to Fig. 5A, the write operation of an ATM cell into the cell buffer 4 is explained.

When an ATM cell is entered into one of the terminals 1, header information of the ATM cell such as information included in VPI or VCI is extracted by the quality class determining device 3 and quality class is determined (step A1).

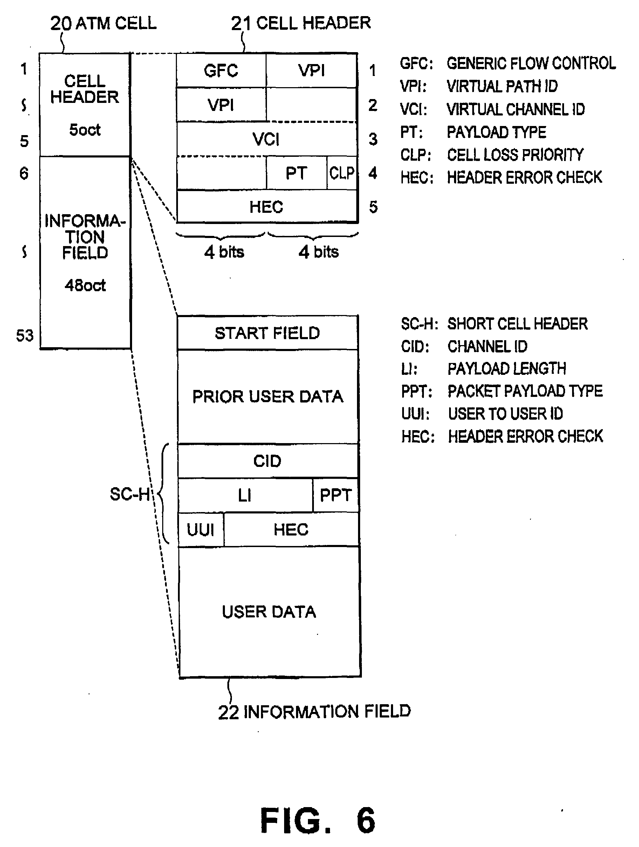

Fig. 6 shows a layout of the ATM cell. The ATM cell 20 has fifty three bytes length and includes five bytes of cell header 21 and forty eight bites of information field 22 which has any contents. The cell header 21 is an example of an ATM cell header when the ATM cell is used between a terminal and an ATM network. Here, the cell header 21 includes four bits of flow control area, eight bits of VPI area, sixteen bits of VCI area, three bits of payload area, one bits of cell loss priority area, and eight bits of header error control area. Also, an ATM cell used in an ATM network has similar configuration to the above cell except that the flow control area is used as a virtual path identifier area.

In an ATM communication technique, a connection between a calling terminal and a called terminal is established by a call request from the calling terminal, a unique VCI is assigned to each of the connections in each link in an ATM network, and a unique VPI is assigned to the connections which are belong to a group.

Herein, contents of services which are provided in the ATM cell multiplexing device, that is, quality class is defined according to call request of the connection, the quality class is registered into a VPI field or a VCI field of a quality class table (not shown). Thereby, the quality class determining device 3 refers to the table and determines a quality class of the ATM cell.

Also, the quality class determining device 3 may determine the quality class by referring to an AAL (ATM Adaptation Layer) header information included in the information field of the ATM cell.

When the ATM cell multiplexing device as shown in Fig. 4 is applied to a base station of radio terminal, variable length packet data such as voice data from each terminal are sent to the device, the data are converted into ATM cells at the terminal terminating device 2, and the ATM cells are multiplexed and sent to a radio control station through a transmission line 6, a short cell header (SC-H) such as an information field 22 shown in Fig. 6 is appended to the variable length packet data and then, they are divided into ATM cells.

The short cell header such as the information field as shown in Fig. 6 has a configuration of AAL type 2 short cell header based on ITU-T 1.362.2. The short cell header includes, in three bytes anywhere from a point which is six bytes distant from the beginning of the information field to the end of the information field, eight bits of channel identifier (CID) area, six bits of payload length area, two bits of packet payload type area, three bits of user to user identifier area, and five bits of header error check area. The quality class determining device 3 may extract, for example, the CID about each received ATM cell or directly obtain the CID from the terminal terminating device 2, and may determine quality class of the ATM cell according to the CID.

Returning to Fig. 5A, the pointer managing device 7 which receives notification of quality class from the quality class determining device 3 retrieves an empty pointer in the cell buffer 4 (step A2), stores the cell data into an area which is pointed by the address related to the pointer value (step A3), and the pointer value is stored into the class buffer related to the corresponding quality class of the pointer buffer 8 simultaneously with step A3.

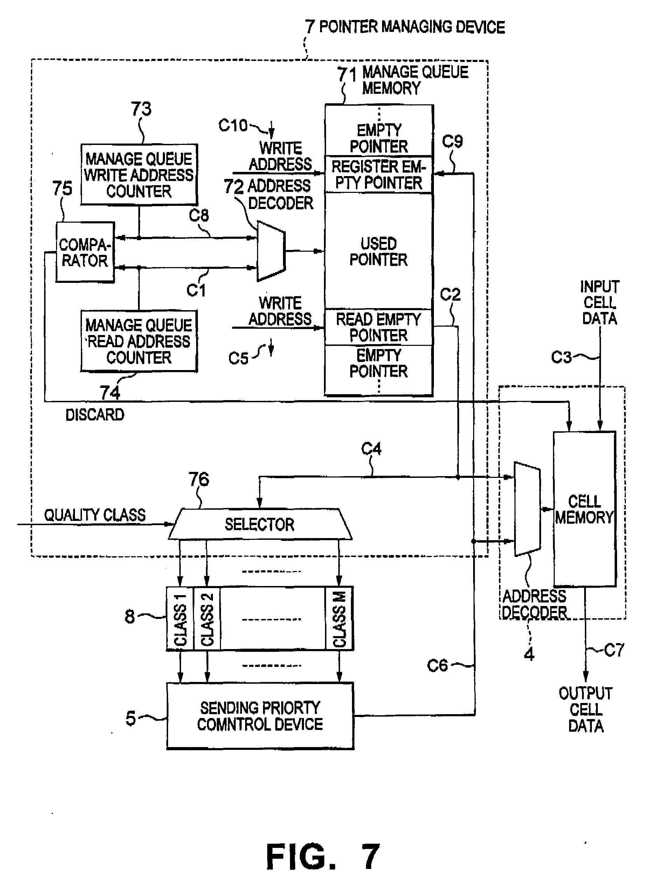

Next, description is made about operation of a pointer managing device 7 with reference to Fig. 7. Fig. 7 shows a block diagram of the pointer managing device 7 as shown in Fig. 4. The pointer managing device 7 includes a manage queue memory 71 to which pointers of the sell buffer 4 are registered, an address decoder 72 of the manage queue memory 71, a manage queue write address counter 73 which represents a write address of the manage queue memory, a manage queue read address counter 74 which represents a read address of the manage queue memory, a comparator 75 which compares the manage queue write address counter 73 and the manage queue read address counter 74, and selector 76 which selects one of class buffers (class 1 to class M) of the pointer buffer 8 according to a quality class which is notified by the quality class determining device 3.

If an amount of the cell buffer 4 is N cells, fifty three bytes of memory space x N are prepared. If a pointer value of the beginning of each memory space is represented by one word of length, N words length of memory is prepared in the manage queue memory 71.

If the values of address of words in the manage queue memory 71 are zero to N-1, the manage queue write address counter, which is N-ary counter, represents the smallest address of the manage queue memory 71 which stores used pointers in the cell buffer 4 consecutively, and the manage queue read address counter, which is also N-ary counter, represents the smallest address of the manage queue memory 71 which stores empty pointers in the cell buffer 4 consecutively.

When the ATM cell is entered, a counter value of the manage queue read address counter 74 is decoded at the address decoder 72 (flow C1, in Fig. 7), a value of an empty pointer of the cell buffer 4 stored in the address (flow C2), and the cell data is written to the cell buffer 4 by using the pointer value as s write address (flow C3).

Simultaneously, the pointer value is written to a class buffer which is selected by the selector 76 according to the quality class (flow C4).

As described above, the cell data is written to an area of the cell buffer 4 pointed by the empty pointer, the manage queue read address counter 74 is incremented by one (arrow C5), and an address of the pointer value of the manage queue memory 71 is incorporated to the used addresses as the largest address.

Next, description is made about operation of reading the ATM cell from the cell buffer 4 with reference to Figs. 4, 5(B), and 7.

At first, the sending priority controls device 5 controls sending of ATM cells, determines quality classes of the ATM cells to be sent according to a predetermined priority algorithm (step B1), and reads out a pointer value from the corresponding class of buffer in the pointer buffer 8 (step B2, flow C6 in Fig. 7) in the manner of FIFO. Then, the ATM cell data are read out from the cell buffer 4 by using the read the pointer value as read address, and the read ATM cell data are sent to the transmission line 6 (step B3, flow C7).

After sending the ATM cell data, a count value which the manage queue write address counter 73 represents is decoded by the address decoder 72 (flow C8), a pointer value of the sent ATM cell data is written to the corresponding address in the manage queue memory 71 (flow C9), the manage queue write address counter 73 is incremented by one (arrow C10), and the end of an empty area is registered as an empty pointer (step B4).

The comparator 75 compares a count value of the manage queue write address counter 73 (write address counter value) with a count value of the manage queue read address counter 74 (read address counter value), if the both are coincident, it is determined that the cell buffer 4 has no empty and a cell discard signal is sent, as a result, a received cell data is discarded without buffering into the cell buffer 4.

In the configurations and the operations of the ATM cell multiplexing device according to the invention as described above, efficiency of usage of the cell buffer may be improved and similar performance is achieved with less memory.

Therefore, the ATM cell multiplexing device of the invention stores ATM cells into an empty area in the common cell buffer 4 one after another regardless of its quality class. Further, the device is operable to dramatically reduce the amount of the required cell buffer by storing a pointer value of the cell buffer in which the cell data is stored into a class buffer which is individually prepared for quality class in a pointer buffer 8 and which is FIFO memory.

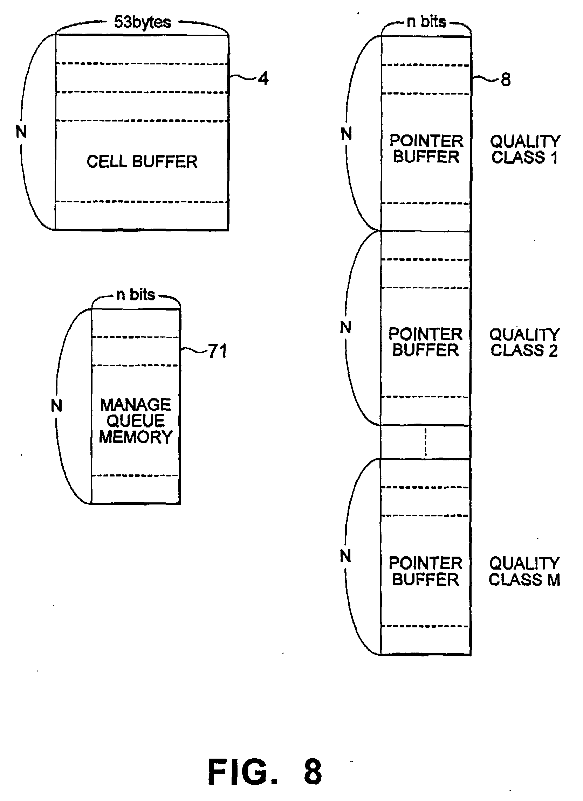

According to the invention, as described in Fig. 8, it is simply needed to prepare a cell buffer which can store N x 53 bytes of ATM cells, a pointer buffer 8 which includes M of class buffers (class 1 to class M) each of which can store N x n bits of pointers, and a manage queue memory 17 which has the same volume amount to the pointer buffer 8. Therefore, efficiency of usage of buffers is improved and memory resources are substantially reduced.

As described above, according to the invention, the ATM cell multiplexing device stores a plurality of quality classes of ATM cells into one cell buffer 4 collectively, and stores and controls a pointer value, which is a value of the address of the ATM cell stored in the cell buffer, in one of class buffers each of which corresponds to a quality class. Consequently, efficiency of usage of the cell buffer is improved and similar performance is achieved with less memory.

## Claims

1. A method of multiplexing ATM cells into a sequence of transmitted ATM cells transmitted through a transmission line (6), the ATM cells being classified into different quality classes and being stored in a cell storage (4), the method comprising the steps of:
storing the ATM cells of different quality classes in empty areas in the cell storage (4);
storing, for each quality classes, pointer values which point the areas storing ATM cells of different quality classes;
reading the pointer values for each quality class with reference to the pointer values stored; and
reading the ATM cells stored in the areas by using the pointer values to send the transmitted ATM cells to the transmission line.

2. An ATM cell multiplexing device which multiplexes ATM cells into a sequence of transmitted ATM cells transmitted through a transmission line (6), the ATM cells being classified into different quality classes, comprising:
a cell storage (4) which stores the ATM cells of different quality classes in empty areas;
a pointer manager (7) which manages addresses of the areas storing the ATM cells;
a quality class determining circuit (3) which determines quality classes of the ATM cells;
a pointer value storage (8) which stores, for each quality class, pointer values of the areas storing the ATM cells under control of the pointer manager (7); and
a sending priority controller (5) which reads the pointer values for each quality class from the pointer value storage (8), reads the ATM cells stored in the areas in the cell storage (4) with reference to the pointer values which point the areas, and sends the ATM cells to the transmission line (6).

3. The ATM cell multiplexing device claimed in claim 2, wherein the pointer value storage (8) is used for each quality class, and includes a plurality of class buffers each of which is FIFO memory.

4. The ATM cell multiplexing device claimed in claim 3, wherein the pointer manager (7) comprises:
a manage queue memory (71) which includes a plurality of addresses which are equal in number to areas in the cell storage and which are consecutively and cyclically numbered in the manage queue memory (71) to store both the pointer values concerned with the empty areas and the pointer values concerned with used areas;
a manage queue read address counter (74) which points the minimum address concerned with the consecutively numbered areas in which the pointer values concerned with the empty areas are stored, and which is incremented whenever a pointer value is written to the empty areas;
a manage queue write address counter (73) which points the minimum address concerned with the consecutively numbered areas in which the pointer values concerned with the used areas are stored, and which is incremented whenever a pointer value is written to the empty areas;
an address decoder (72) which decodes the value of the manage queue read address counter (74) as read address of the manage queue memory (71) when the pointer value in the empty areas is read, and decodes the value of the manage queue write address counter (73) as write address of the manage queue memory (71) when the pointer value in the empty areas is written;
a comparator (75) which compares the value of the manage queue write address counter (73) and the value of the manage queue read address counter (74), and sends an ATM cell discard signal when it is determined that both the counter values are coincident with each other from the comparison; and
a selector (76) which selects one of the class buffers corresponding to the quality class of the ATM cell which is stored in the empty area according to the determination of the quality class determining circuit (3), and stores the pointer value of the empty area which is read into the selected class buffer.

5. The ATM cell multiplexing device claimed in claim 2, wherein the quality class determining circuit (3) determines quality class of the ATM cells with reference to cell header information of the ATM cells.

6. The ATM cell multiplexing device claimed in claim 2, wherein the quality class determining circuit (3) determines quality class of the ATM cells with reference to AAL header information included in information fields of the ATM cell.

7. An ATM cell multiplexing device which is operable to deal with ATM cells which are classified into different quality classes, comprising:
a cell buffer (4) which includes a plurality of areas each of which stores one of the ATM cells;
an access manager which performs read operation and write operation of the ATM cells for the cell buffer using pointers each of which corresponds to an area; and
a pointer manager which relates each of the pointers with the quality class of the ATM cell which is written to the area which is pointed by the pointer.

8. A method of multiplexing of ATM cells which is operable to deal with ATM cells which are classified into different quality classes, the method comprising the steps of:
storing the ATM cells into areas;
relating each of the areas with a pointer;
relating each of the pointers with the quality class of the ATM cell which is stored in the area which is pointed by the pointer; and
reading the ATM cells from the areas using the pointers for each quality class.

9. A computer readable medium which stores a program operable for multiplexing of ATM cells which is operable to deal with ATM cells being classified into different quality classes, the program comprising the steps of:
storing the ATM cells into areas;
relating each of the areas with a pointer;
relating each of the pointers with the quality class of the ATM cell which is stored in the area which is pointed by the pointer; and
reading the ATM cells from the areas using the pointers for each quality class.
